# FASCICULE DE BREVET EUROPEEN

(11) **EP 2 997 588 B1**
(45) Date de publication et mention de la délivrance du brevet: **01.03.2017**
(21) Numéro de dépôt: 14720562.9
(22) Date de dépôt: 24.04.2014
(51) Int. Cl.: H01H 39/00, H02H 3/00, H01H 9/16, H01L 31/02, G08B 17/06

(54) **SECTIONNEUR POUR SOURCE D'ALIMENTATION ELECTRIQUE CONTINUE DE PUISSANCE**
ISOLATOR FÜR GLEICHSTROM-STROMVERSORGUNGSQUELLE
ISOLATOR FOR DC ELECTRICAL POWER SUPPLY SOURCE

(30) Priorité: 16.05.2013 FR 1354410
(43) Date de publication de la demande: 23.03.2016
(73) Titulaire: Commissariat à l'Energie Atomique et aux Energies Alternatives, 75015 Paris (FR)
(72) Inventeur: MANGEANT, Christophe, F-73170 Yenne (FR)
(74) Mandataire: GIE Innovation Competence Group
(86) Numéro de dépôt international: PCT/EP2014/058299
(87) Numéro de publication internationale: WO 2014/183967

(56) Documents cités:
- DE-A1-102011 053 522
- US-A1- 2004 112 239
- US-A1- 2010 218 659
- US-A1- 2010 328 014
- US-B1- 6 556 119

## Description

L'invention concerne les sources d'alimentation électrique continue de puissance, telles que les installations photovoltaïques ou les batteries de puissance, dans lesquelles la tension dépasse fréquemment 50 Volts avec un courant supérieur à plusieurs centaines de milliampères.

De telles sources d'alimentation électrique continue incluent le plus souvent plusieurs générateurs de même type connectés en série, afin de disposer de niveaux de tension satisfaisants pour l'application visée. Ainsi, les générateurs d'électricité photovoltaïque installés dans un cadre domestique ou professionnel présentent généralement de nombreux panneaux photovoltaïques connectés en série. De tels panneaux photovoltaïques sont fréquemment disposés sur la toiture d'un bâtiment et génèrent un courant restitué au réseau électrique public par l'intermédiaire d'un onduleur. En connectant des panneaux photovoltaïques en série, on génère une tension continue d'un niveau suffisamment élevé pour permettre une conversion optimale par l'onduleur. On peut connecter en parallèle sur l'onduleur plusieurs branches comprenant chacune plusieurs panneaux photovoltaïques connectés en série. Avec la nécessité d'accroître la production d'énergies renouvelables, la puissance des installations photovoltaïques mises en place est sans cesse croissante. Les niveaux de tension et de courant générés peuvent donc être relativement élevés.

Lors d'opérations de maintenance sur le réseau ou lors d'interventions de sécurité dans le bâtiment, l'alimentation électrique du réseau électrique du bâtiment est généralement réalisée par commutation d'un disjoncteur sur le boîtier électrique général. Par ailleurs, l'onduleur étant généralement alimenté par le réseau électrique, son fonctionnement est automatiquement interrompu lors de la commutation du disjoncteur. Ainsi, même si les panneaux photovoltaïques continuent à être illuminés, la restitution de courant sur le réseau électrique est interrompue. Ainsi, aucune électrocution n'est à craindre sur le réseau électrique entre le boîtier général et l'onduleur.

Cependant, en particulier lors d'une intervention à proximité d'une installation photovoltaïque, il reste un risque que de l'eau, par exemple projetée par des équipes de pompiers lors d'un incendie, puisse conduire l'électricité depuis les panneaux photovoltaïques jusqu'à une équipe d'intervention ou de maintenance, par exemple si certaines gaines de protection sont dégradées. Il reste également un risque d'un contact direct avec un conducteur dégradé et sous tension. Si les panneaux photovoltaïques sont illuminés au moment de l'intervention, ceux-ci peuvent continuer à générer une tension pouvant atteindre plusieurs dizaines ou plusieurs centaines de volts. Il s'ensuit alors un risque d'électrocution pour les personnes situées à proximité. Par conséquent, en présence de tels générateurs de tension continue sur une zone d'incendie, les équipes de secours sont parfois amenées à stopper leur intervention et à attendre la fin de l'incendie. L'ampleur des dégâts peut alors s'en trouver fortement accrue, en particulier dans un contexte industriel. En outre, du personnel réalisant le déblaiement postérieurement à l'incendie reste lui aussi confronté à un risque d'électrocution.

Les panneaux photovoltaïques sont intrinsèquement des facteurs de risques de départ d'incendie. En effet, la génération de courant/tension se produit à l'intérieur du panneau photovoltaïque lui-même. Des défauts internes aux panneaux (soudures défectueuses, cellule cassée ou encore défaut d'isolement électrique) peuvent provoquer des arcs électriques internes à l'origine de départs d'incendie. De même, du fait de l'énergie stockée dans des batteries électrochimiques, les risques de départ d'incendie sont accrus par de potentielles réactions chimiques incontrôlées à l'intérieur de ces batteries.

Aucune solution connue ne permet à une équipe d'interventions d'éliminer les risques d'électrocution de façon fiable, de façon instantanée et depuis une zone sûre et ce de façon purement mécanique et en ne faisant pas intervenir d'élément semi-conducteur dans le dispositif situé au plus près des panneaux photovoltaïques.

Le document US2010/0218659 décrit un sectionneur pour des câbles de connexion électrique à une source de puissance, comportant une lame mobile.

Le document US2004/0112239 décrit un sectionneur pyrotechnique muni d'une lame mobile selon une course entre une position de conduction et une position de sectionnement.

Le document US6556119 décrit un sectionneur pour des câbles de connexion électrique dans un contexte automobile et comportant un élément de sectionnement mobile.

L'invention vise à résoudre un ou plusieurs de ces inconvénients. L'invention porte ainsi sur un système d'alimentation électrique continue de puissance, tel que défini dans les revendications annexées.

L'invention porte également sur un sectionneur pour source d'alimentation électrique continue de puissance, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en perspective d'un exemple de mise en oeuvre de l'invention dans un bâtiment ;
- la figure 2 illustre un exemple de commande de détonateur avec un connecteur d'un sectionneur associé ;
- la figure 3 est une vue en coupe transversale schématique d'un mode de réalisation d'un sectionneur ;
- la figure 4 est une vue en coupe transversale schématique d'une variante du sectionneur de la figure 3 ;
- la figure 5 est une vue en coupe longitudinale schématique d'une autre variante du sectionneur de la figure 3 ;
- la figure 6 est une vue en coupe longitudinale d'une première variante de lame du sectionneur ;
- la figure 7 est une vue en coupe longitudinale d'une deuxième variante de lame du sectionneur ;
- la figure 8 est une vue en coupe longitudinale d'une troisième variante de lame du sectionneur ;
- les figures 9 et 10 illustrent les positions respectives d'une première variante de conducteur de court-circuit et de câbles d'alimentation, dans différentes configurations ;
- les figures 11 et 12 illustrent les positions respectives d'une deuxième variante de conducteur de court-circuit et de câbles d'alimentation dans différentes configurations ;
- la figure 13 illustre schématiquement une première configuration de câbles d'alimentation dans un sectionneur ;
- la figure 14 illustre schématiquement une deuxième configuration de câbles d'alimentation dans un sectionneur ;
- la figure 15 illustre schématiquement un dégagement pour la lame du sectionneur, rempli de mousse ;
- la figure 16 illustre schématiquement une paroi de fond d'un boîtier de sectionneur avant utilisation ;
- la figure 17 illustre schématiquement la paroi de fond du boîtier de sectionneur après utilisation ;
- les figures 18 à 21 illustrent un sectionneur muni de la lame de la figure 7 pour différentes positions de cette lame.

L'invention propose notamment d'utiliser un sectionneur muni d'une lame entraînée par du gaz sous pression suite à l'explosion d'un explosif appartenant à un élément pyrotechnique. Dans sa course, la lame assure une rupture mécanique d'un conducteur électrique du courant de la source d'alimentation continue.

On obtient ainsi un sectionneur assurant une coupure de conduction quasiment instantanée, basée sur une rupture mécanique fiable. Une rupture mécanique est en outre à même de rassurer du personnel d'intervention, habitué à assurer la protection d'un site contre des électrocutions en tranchant mécaniquement des câbles d'alimentation. De plus, les éléments pyrotechniques sont des composants pouvant être produits à grande échelle à coût réduit et dont le fonctionnement est largement éprouvé et maîtrisé. Par ailleurs, l'utilisation d'un tel sectionneur ne suppose pas de maintenir une alimentation électrique de veille et ne nécessite qu'une faible énergie extérieure.

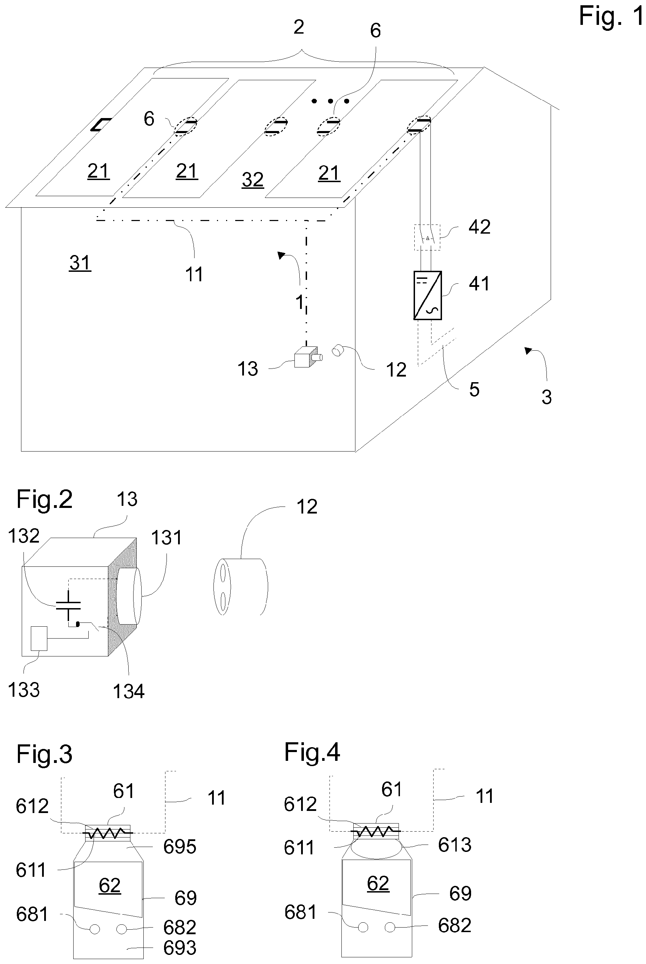

La figure 1 est une vue schématique en perspective d'un bâtiment 3 dans lequel un exemple de système 1 d'alimentation électrique continue de puissance selon un mode de réalisation de l'invention est mis en oeuvre.

Le système 1 comporte une source d'alimentation électrique continue de puissance 2. La source 2 est raccordée à un onduleur 41 par l'intermédiaire de câbles d'alimentation et par l'intermédiaire d'un disjoncteur 42 (muni d'un actionneur d'arrêt d'urgence et typiquement disposé à l'intérieur du bâtiment 3 à proximité de l'onduleur 41).

En l'occurrence, la source 2 inclut plusieurs éléments d'alimentation électrique continue connectés en série. Les éléments électriques d'alimentation continue sont ici des panneaux photovoltaïques 21 connectés électriquement en série, et disposés sur la toiture 32 du bâtiment 3. Les panneaux photovoltaïques 21 génèrent un courant et une tension continus lors de leur ensoleillement.

Les panneaux photovoltaïques 21 sont connectés aux entrées (+) et (-) de tension continue de l'onduleur 41. Une sortie de tension alternative de l'onduleur 41 est connectée à un réseau électrique 5, par exemple un réseau électrique public. L'onduleur 41 réalise de façon connue en soi une conversion continu/alternatif et une transformation du niveau de tension généré par les modules photovoltaïques vers un niveau de tension compatible avec le réseau électrique 5. Le réseau électrique 5 comprend son propre boîtier de protection électrique incluant un disjoncteur général, de façon connue en soi. L'onduleur 41 peut également comprendre un interrupteur permettant son isolation du réseau électrique 5.

Chaque panneau photovoltaïque 21 génère par exemple une tension maximale inférieure à 50 V continu, de préférence inférieure à 45 V continu lors de son ensoleillement. De tels niveaux de tension ne peuvent pas induire d'électrocution grave. L'association en série de plusieurs panneaux photovoltaïques 21 permet de générer une tension de plusieurs centaines de volts, pouvant s'avérer appropriée pour sa conversion en tension alternative et la restitution du courant électrique généré sur le réseau électrique 5.

Des sectionneurs 6 sont positionnés entre les panneaux photovoltaïques 21 d'une part et entre un panneau photovoltaïque 21 et l'onduleur 41 d'autre part. Lors de l'ouverture des sectionneurs 6, la tension susceptible d'être présente en un point du circuit reliant les panneaux photovoltaïques est donc réduite. Le système 1 comprend en outre un réseau électrique incluant des câbles 11 et reliant les sectionneurs 6 à un connecteur de commande 12. Les câbles 11 seront dimensionnés conformément aux normes des dispositifs de sécurité et pourront cheminer de façon optimisée par rapport au risque de propagation d'incendie. Le connecteur de commande 12 est fixé à demeure sur le bâtiment 3, par exemple sur une paroi 31 extérieure du bâtiment ou tout autre lieu facilement accessible et visible pour des services d'intervention. Le système 1 comprend en outre une commande 13, par exemple sous forme de commande portative.

Un sectionneur 6 selon l'invention comporte une lame mobile selon une course, entre une position de conduction (fermeture du sectionneur 6) et une position de sectionnement (ouverture du sectionneur 6). L'entraînement de la lame sur sa course assure la rupture d'un conducteur conduisant du courant de la source d'alimentation continue 2, ce conducteur est alors séparé en deux portions isolées électriquement l'une de l'autre. Une source de gaz sous pression est utilisée pour entraîner sélectivement la lame selon sa course, lorsqu'on souhaite ouvrir le sectionneur 6. À cet effet, le sectionneur 6 inclut un élément pyrotechnique muni d'un détonateur à déclenchement par commande externe et un explosif dont l'explosion est initiée par le détonateur. L'explosion induit l'entraînement de la lame par la source de gaz sous pression. Différentes variantes de sectionneurs 6 sont illustrées et détaillées par la suite.

La figure 2 illustre de façon schématique un exemple de commande 13 de détonateur. La commande 13 comporte un connecteur 131 dont le facteur de forme est complémentaire du connecteur 12. Ainsi, le connecteur 131 peut-être accouplé au connecteur 12, le connecteur 12 empêchant ainsi une connexion inappropriée au réseau électrique des câbles 11. On évite ainsi un actionnement malveillant du sectionneur 6. La commande 13 inclut un dispositif de stockage d'énergie électrique 132, par exemple une batterie électrochimique ou une capacité. Le dispositif de stockage d'énergie 132 est sélectivement connecté au connecteur 131 par l'intermédiaire d'un interrupteur 134. L'interrupteur 134 est du type normalement ouvert, sa fermeture étant commandée par une interface 133 destinée à être actionnée par l'utilisateur de la commande 13, lorsque celui-ci souhaite commander le sectionneur 6. Le dispositif de stockage 132 est avantageusement rechargeable par l'intermédiaire d'une interface de la commande 13, pour être par exemple maintenu sur un socle de recharge à l'intérieur d'un véhicule d'intervention.

Avantageusement, la commande 13 peut comporter un indicateur lumineux, indiquant si l'ensemble des sectionneurs 6 commandés par le réseau de câbles 11 est ouvert. En déterminant par exemple que des thermistances des détonateurs ont été rompues, un tel indicateur permet à l'utilisateur ayant raccordé sa commande 13 au réseau de câbles 11 de vérifier que l'ensemble des sectionneurs 6 est ouvert. A contrario, l'indicateur permet à l'utilisateur de déterminer s'il reste un risque d'électrocution par la source d'alimentation continue 2. Par rapport à des sectionneurs automatiques, un tel sectionneur 6 rassure les équipes d'intervention car ils conservent le contrôle du sectionnement électrique.

Dans les variantes illustrées et détaillées par la suite, le gaz produit par l'explosion assure l'entraînement de la lame mobile. L'élément pyrotechnique du sectionneur 6 est donc utilisé pour produire le gaz d'entraînement de la lame. On peut cependant également envisager d'entraîner la lame mobile au moyen d'un gaz sous pression stocké dans un réservoir, l'explosion servant alors à ouvrir une vanne entre ce réservoir et la lame mobile.

La figure 3 est une vue en coupe transversale schématique d'une première variante d'un sectionneur 6. Un tel sectionneur 6 peut présenter un encombrement limité à quelques dizaines de centimètres cubes. Le sectionneur 6 comporte un élément pyrotechnique 61. L'élément pyrotechnique 61 inclut une thermistance 611 et un explosif 612 dans lequel la thermistance 611 est noyée. La thermistance 611 est connectée au connecteur 12 par l'intermédiaire de câbles 11 du réseau de commande. L'élément pyrotechnique 61 est fixé à une enceinte hermétique 69 du sectionneur 6. Une lame 62 est montée mobile dans l'enceinte 69. L'enceinte 69 comporte une chambre de dilatation 695 ménagée entre l'explosif 612 et la lame 62. Des premier et deuxième conducteurs électriques 681 et 682 traversent l'enceinte 69. La lame 62 est montée mobile dans l'enceinte 69 selon une course. Cette course comporte une position initiale de conduction ou de fermeture, dans laquelle la lame 62 est écartée des conducteurs 681 et 682 (position illustrée à la figure 3). La course comporte également une position terminale de sectionnement ou d'ouverture, l'entraînement de la lame 62 selon cette course induisant la rupture des conducteurs électriques 681 et 682 par interférence mécanique avec cette lame 62. Les conducteurs électriques 681 et 682 traversent une chambre de découpe 693 de l'enceinte 69, la lame 62 étant ici interposée entre la chambre de découpe et la chambre de dilatation.

Pour ouvrir le sectionneur 6, une impulsion électrique d'une durée et d'une puissance suffisantes (par exemple quelques ampères pendant quelques millisecondes) est appliquée par la commande 13 sur la thermistance 611, par l'intermédiaire des câbles 11. La thermistance 611 forme un détonateur pour l'explosif 612 en le chauffant jusqu'à provoquer l'explosion. Les gaz produits par l'explosion se répandent dans la chambre de dilatation 695 et entraînent alors la lame 62 selon sa course. Une pression élevée pouvant être obtenue dans la chambre de dilatation 695, la lame 62 découpe les conducteurs 681 et 682, afin d'assurer la rupture de chacun de ces conducteurs en deux parties isolées l'une de l'autre. On assure ainsi une coupure d'un éventuel courant traversant l'alimentation électrique 2. Une quantité suffisante d'explosif 612 sera utilisée afin de garantir la découpe des conducteurs 681 et 682 susceptibles d'être utilisés.

La lame 62 est ici montée coulissante dans l'enceinte 69. L'ajustement entre la lame 62 et l'enceinte 69 est défini de façon appropriée pour permettre à la fois le coulissement de la lame 62 selon sa course, et garantir que la dilatation des gaz produits par l'explosion entraînent la lame 62 plutôt que de s'immiscer entre l'enceinte 69 et la périphérie de cette lame 62.

La lame 62 est avantageusement maintenue mécaniquement dans la position de fermeture du sectionneur 6, par exemple par l'intermédiaire de plots flexibles en saillie à l'intérieur de l'enceinte 69. La lame 62 franchira ces plots flexibles pour être entraînée suivant sa course seulement lorsqu'une sollicitation suffisante sera exercée sur la lame 62 par les gaz sous pression dus à l'explosion.

La figure 4 est une vue en coupe transversale schématique d'une deuxième variante d'un sectionneur 6. Le sectionneur 6 selon cette variante reprend la structure du sectionneur 6 de la première variante. Dans cette deuxième variante, le sectionneur 6 comporte une enveloppe ou membrane 613 disposée dans la chambre de dilatation 695, entre l'explosif 612 et la lame 62. Une telle enveloppe 613 est par exemple réalisée dans un textile tel que ceux utilisés pour la réalisation de coussins gonflants de sécurité. Après explosion de l'explosif 612, le gaz sous pression produit se déverse dans l'enveloppe 613, le remplissage de l'enveloppe 613 entraînant la lame 62 selon sa course. L'utilisation d'une enveloppe 613 garantit un entraînement de la lame 62 par les gaz générés par l'explosion sans se soucier de l'étanchéité entre la lame 62 et l'enceinte 69.

Avantageusement, l'explosif 612 est configuré pour exploser spontanément lors d'un maintien prolongé du sectionneur 6 à une température au moins égale à 200°. Ainsi, les sectionneurs 6 seront automatiquement actionnés pour mettre le bâtiment 3 en sécurité lors d'un incendie.

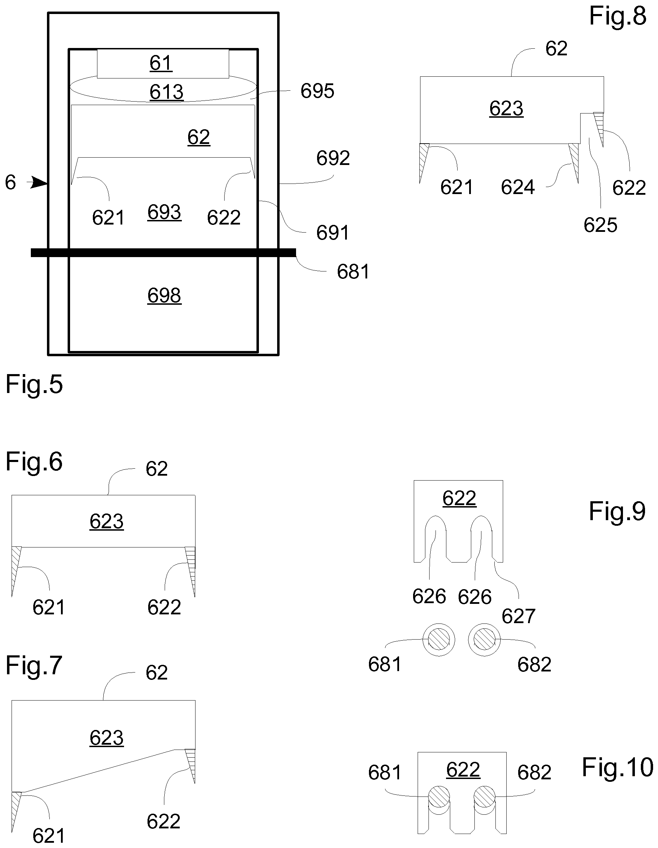

La figure 5 est une vue en coupe schématique longitudinale d'un mode de réalisation du sectionneur 6 de la figure 3. La lame 62 est ici montée coulissante dans un guide 691. L'enceinte 69 inclut un boîtier étanche 692 incluant le guide 691 et protégeant les composants placés à l'intérieur de la poussière, de l'humidité, ou encore d'agressions chimiques ou mécaniques. Le boîtier étanche 692 peut être réalisé dans le même matériau que les matériaux des boîtiers de jonction usuels des panneaux photovoltaïques, par exemple du polyéthylène haute densité (PEHD). Le boîtier 692 permet également de garantir la sécurité des personnes contre l'explosion de l'explosif 612 et contre les mouvements de la lame 62. Une telle configuration permet au sectionneur d'être manipulable par des personnes sans formation à la manipulation des explosifs, malgré la présence de l'élément pyrotechnique 62. La chambre de découpe 693 se prolonge sous les conducteurs 681 et 682 par un dégagement 698 destiné à recevoir la lame 62 en fin de course. On pourra prévoir un mécanisme de cliquet dans le dégagement 698 pour maintenir la lame 62 une fois dans sa position de sectionnement, et ainsi garantir l'irréversibilité du sectionnement.

La lame 62 comprend un élément de découpe 621. L'élément 621 présente avantageusement une forme tranchante pour favoriser la rupture des conducteurs 681 et 682. L'élément de découpe 621 est avantageusement réalisé en matériau isolant électrique, par exemple une céramique isolante. L'élément de découpe 621 est configuré pour être interposé entre les portions isolées des conducteurs 681 et 682 dans la position de sectionnement de la lame 62. L'élément de découpe 621 garantit ainsi une ouverture avec absence d'arc entre les portions isolées de chacun des conducteurs 681 et 682.

Le sectionneur 6 comprend en outre un élément conducteur 622 solidaire de la lame 62. L'élément conducteur 622 est configuré pour interférer avec les conducteurs 681 et 682 sur la course de la lame 62 entre les positions de conduction et de sectionnement. Dans la position de sectionnement de la lame 62, l'élément conducteur 622 connecte électriquement une portion isolée du conducteur 681 à une portion isolée du conducteur 682. Ainsi :
- une portion isolée du conducteur 681 est isolée électriquement d'une portion isolée du conducteur 682 sur une interface du sectionneur 6 par exemple connectée à l'onduleur 41 ;
- une autre portion isolée du conducteur 681 est connectée électriquement à une autre portion isolée du conducteur 682 sur une interface du sectionneur 6 par exemple connectée à un panneau photovoltaïque 21.

La figure 6 est une vue en coupe longitudinale schématique d'une première variante d'une lame 62. La lame 62 comprend une paroi 623 formant un piston et un support. La lame 62 comprend en outre un élément de découpe 621 isolant électrique et fixé sur la face inférieure du piston 623. La lame 62 comprend en outre un élément conducteur électrique 622 fixé sur la face inférieure du piston 623. L'élément de découpe 621 et l'élément conducteur 622 sont fixés sur des côtés opposés du piston 623. Le piston 623 comporte ici une face inférieure plane et l'élément de découpe 621 et l'élément conducteur 622 sont disposés de façon à faire saillie d'une même distance par rapport à cette face inférieure.

La figure 7 est une vue en coupe longitudinale schématique d'une deuxième variante d'une lame 62. La face inférieure du piston 623 est inclinée, de sorte que l'extrémité inférieure de l'élément de découpe 621 soit disposée sous l'extrémité de l'élément conducteur 622. On garantit ainsi que la rupture par l'élément de découpe 621 des conducteurs 681 et 682 intervient avant une mise en conduction entre ces conducteurs 681 et 682 par l'élément de conduction 622. En outre, cette variante permet d'accroître l'éloignement entre les deux portions isolées d'un même conducteur en position de sectionnement. On limite ainsi encore le risque de formation d'un arc électrique entre ces portions isolées.

La figure 8 est une vue en coupe longitudinale schématique d'une troisième variante d'une lame 62. La face inférieure du piston 623 comporte une partie plate. Des éléments de découpe isolants 621 et 624 sont fixés à chaque extrémité de cette partie plate. Le piston 623 comporte un décrochement 625 au niveau d'une extrémité. L'élément conducteur 622 est fixé au niveau de ce décrochement 625. L'extrémité inférieure des éléments de découpe 621 et 624 est ainsi disposée sous l'extrémité inférieure de l'élément conducteur 622. Les conducteurs 681 et 682 sont ainsi rompus par les éléments de découpe 621 et 624 avant une mise en conduction entre ces conducteurs 681 et 682 par l'élément de conduction 622. En outre, du fait de la présence de deux éléments de découpe en des emplacements différents le long des conducteurs 681 et 682, un tronçon complet des conducteurs 681 et 682 est découpé et entraîné par la lame 62, améliorant la fiabilité du sectionnement.

Les figures 9 et 10 illustrent de façon schématique en vue de face une première variante d'un élément de conduction 622, respectivement dans une position de conduction du sectionneur 6 et dans une position de sectionnement. L'élément de conduction 622 inclut une plaque métallique dans laquelle deux gorges 626 (dont les bords sont éventuellement coupants) sont ménagées. Dans la position de conduction du sectionneur 6 illustrée à la figure 9, les gorges 626 sont positionnées à l'aplomb de conducteurs respectifs. La plaque métallique comporte avantageusement des chanfreins 627 au niveau de l'entrée des gorges 626 pour faciliter l'entrée des conducteurs 681 et 682 dans les gorges 626 durant la course de la lame 62. Dans la position de sectionnement illustrée à la figure 10, les conducteurs 681 et 682 sont positionnés dans les gorges 626. L'élément de conduction 622 traverse les gaines isolantes des conducteurs 681 et 682 et est en contact avec la partie conductrice de ces conducteurs 681 et 682. Un court-circuit est ainsi formé entre ces conducteurs 681 et 682.

La largeur des gorges 626 est avantageusement inférieure au diamètre de la partie conductrice des conducteurs 681 et 682, de sorte qu'en position de sectionnement, l'élément de conduction 622 est couplé mécaniquement aux conducteurs 681 et 682 par déformation plastique de leur partie conductrice.

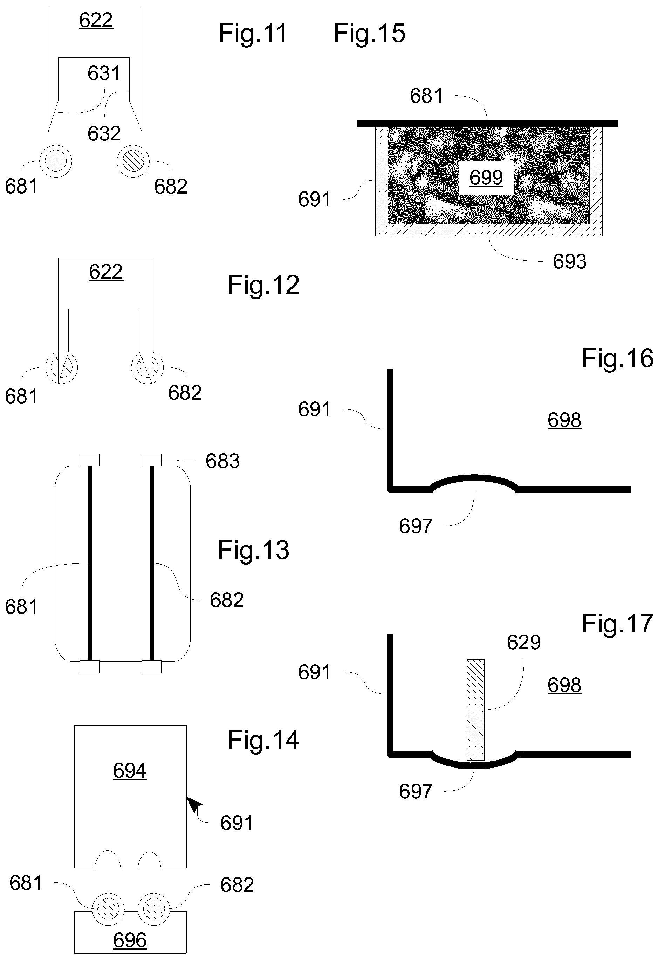

Les figures 11 et 12 illustrent de façon schématique en vue de face une deuxième variante d'un élément de conduction 622, respectivement dans une position de conduction du sectionneur 6 et dans une position de sectionnement. L'élément de conduction 622 inclut deux aiguilles 631 et 632 reliées par un support. Les aiguilles 631 et 632 s'étendent selon une direction verticale. Dans la position de conduction du sectionneur 6 illustrée à la figure 11, les aiguilles 631 et 632 sont positionnées à l'aplomb des conducteurs 681 et 682 respectivement. Dans la position de sectionnement illustrée à la figure 12, les aiguilles 631 et 632 traversent les gaines isolantes des conducteurs 681 et 682 et sont plantées dans la partie conductrice de ces conducteurs 681 et 682. Un court-circuit est ainsi formé entre ces conducteurs 681 et 682. L'élément de conduction 622 est ainsi couplé mécaniquement aux conducteurs 681 et 682 par déformation plastique de leur partie conductrice. Chaque sectionneur 6 est positionné de sorte que l'élément de conduction 622 connecte électriquement les parties des conducteurs 681 et 682 connectées à un panneau photovoltaïque 21.

La figure 13 illustre schématiquement une première configuration de câbles d'alimentation dans un sectionneur 6. Les conducteurs 681 et 682 sont fixés à demeure à l'intérieur de l'enceinte 69 et sont donc partie intégrante du sectionneur 6. Les conducteurs 681 et 682 sont fixés au boîtier 692 pour éviter le déplacement de leur partie externe durant le sectionnement. Chaque conducteur 681, 682 a ses extrémités connectées à des connecteurs électriques de puissance 683. Ces connecteurs 683 se présentent par exemple sous la forme de prises mâles ou femelles, accessibles depuis l'extérieur de l'enceinte 69 pour la connexion à l'onduleur 41 ou aux panneaux photovoltaïques 21. Ces connecteurs 683 pourront présenter un facteur de forme standardisé tel que le système de connecteur multi-contacts n° 3 (MC3) ou le système de connecteur multi-contacts n°4 (MC4). Une telle configuration Imite les risques d'accidents par fausse manipulation, l'utilisateur n'ayant pas accès aux zones des conducteurs 681 et 682 subissant la rupture. La rupture des conducteurs 681 et 682 est en outre parfaitement contrôlée, puisque les conducteurs 681 et 682 sont dimensionnés et assemblés par le fabricant du sectionneur 6 lui-même. Les conducteurs 681 et 682 pourront présenter des sections moindres en regard de l'élément de découpe 621 ou de l'élément de conduction 622, par exemple en réduisant localement l'épaisseur de leur gaine.

Dans la deuxième configuration de la figure 14, les conducteurs 681 et 682 sont des conducteurs de connexion entre des panneaux photovoltaïques 21, ou entre un panneau photovoltaïque 21 et l'onduleur 41. Le sectionneur 6 peut alors être rapporté sur une installation existante ou sur des conducteurs 681 et 682 raccordant d'un seul tenant deux panneaux photovoltaïques en série. À cet effet, le guide 691 peut être réalisé en deux parties emboîtables 694 et 696. La réunion des parties 694 et 696 ménage des ouvertures destinées à être traversées par les conducteurs 681 et 682. Une étanchéité est avantageusement garantie au niveau des ouvertures de passage des conducteurs 681 et 682. Les conducteurs 681 et 682 sont avantageusement suffisamment serrés dans les ouvertures des parties emboîtables 694 et 696, on évite ainsi le déplacement de la partie externe de ces conducteurs 681 et 682 durant le sectionnement. Une telle variante facilite le montage sur une installation préexistante mais nécessite d'être manipulée par une personne habilitée pour tenir compte d'un déplacement possible des lames en cas de déclenchement intempestif.

Dans la variante illustrée à la figure 15, une mousse 699 remplit le dégagement du guide 691 positionné sous les conducteurs 681 et 682. La mousse 699 peut être très poreuse et présenter une densité très réduite pour ne pas freiner excessivement la course de la lame 62. Selon cette variante, on amortit le mouvement de la lame 62 après la rupture des conducteurs 681 et 682. Cette variante permet en outre de réduire la quantité d'air et les risques de condensation à l'intérieur du guide 691, pour ainsi limiter les risques d'oxydation et de détérioration dans la durée du sectionneur 6. L'intérieur du guide 691 peut également être mis sous vide, afin de favoriser le déplacement de la lame 62 et limiter les risques de condensation dans le guide 691.

À la figure 16, on a illustré schématiquement une vue en coupe d'un guide 691 au niveau de son dégagement 698. Le fond du guide 691 forme une butée pour interrompre la course d'une pièce non contondante 629 solidaire de la lame 62. Le fond du guide 691 présente ici un relief 697 en saillie à l'intérieur du dégagement 698. Ce relief 697 est disposé à l'aplomb de l'élément de découpe 621. Ainsi, en fin de course, la pièce 629 vient frapper le relief 697 pour repousser le relief 697 en saillie à l'extérieur du guide 691, dans la configuration illustrée à la figure 17. Le relief 697 est ménagé visible depuis l'extérieur du sectionneur 6, de sorte qu'un opérateur pourra vérifier visuellement si le sectionneur 6 a été actionné ou non. Le relief 697 forme ainsi un indicateur visuel de la position de conduction ou de la position de sectionnement du sectionneur 6. Le fond du guide 691 est avantageusement réalisé en tôle métallique afin de présenter une résistance mécanique satisfaisante lors de la déformation du relief 697.

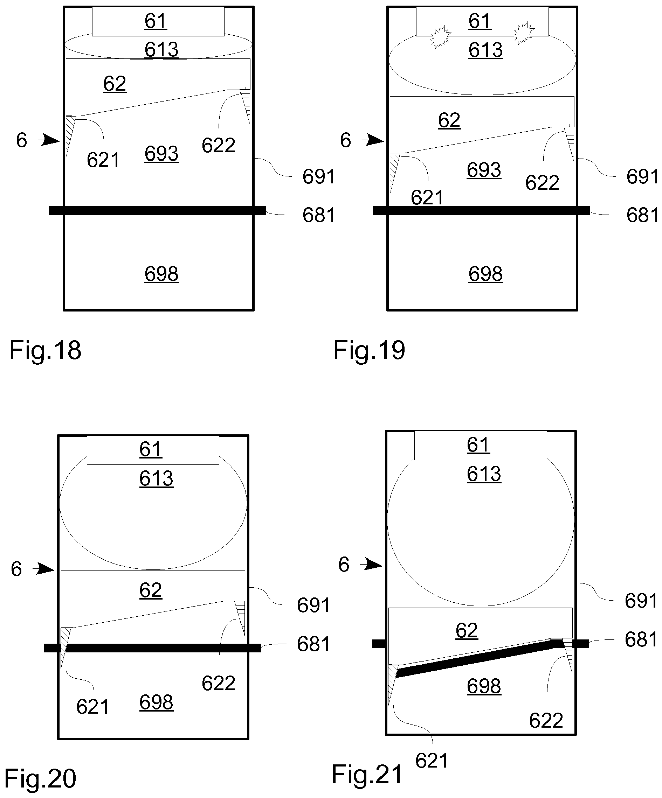

Les figures 18 à 21 illustrent différentes positions d'une lame 62 selon la variante de la figure 7, durant le passage d'une position de conduction à une position de sectionnement dans le sectionneur 6.

Dans la position de la figure 18, la lame 62 est en position de conduction. La lame 62 est ainsi maintenue à proximité de l'élément pyrotechnique 61.

À la figure 19, une explosion est déclenchée par l'élément pyrotechnique 61, de sorte que la membrane 613 se gonfle et commence à repousser la lame 62 dans le guide 691. La lame 62 se rapproche alors des conducteurs 681 et 682.

À la figure 20, le gonflement de la membrane 613 se poursuit, et la lame 62 est davantage entraînée selon sa course dans le guide 691. L'élément de découpe 621 interfère alors avec les conducteurs 681 et 682 pour les rompre chacun en deux parties isolées. La position de sectionnement de la lame 62 est ainsi atteinte.

À la figure 21, le gonflement de la membrane 613 se poursuit, et la lame 62 est entraînée jusqu'à la fin de sa course. Dans cette position, l'élément de conduction 622 connecte électriquement les conducteurs 681 et 682. Dans cette position, le support de la lame 62 entraîne les portions des conducteurs 681 et 682 logées à l'intérieur du guide 691, de sorte que l'élément de découpe 621 sépare chacun des conducteurs 681 et 682 en deux portions isolées et distantes.

Un exemple de dimensionnement de l'élément pyrotechnique 61 va être détaillé. On part de l'hypothèse que les conducteurs 681 et 682 utilisent une section conductrice en cuivre. L'énergie de rupture pour le cuivre est typiquement de 10 MJ/m². L'énergie délivrée par un exemple d'explosif 612 usuel pour des airbags automobiles est de 5 MJ/kg.

La rupture d'un fil de cuivre d'une section de 10 mm² nécessite donc approximativement l'énergie délivrée par 20 mg d'explosif. Ainsi, dans les exemples précédents, deux conducteurs 681 et 682 doivent être rompus par l'explosion, et interfèrent avec la lame 62 en deux emplacements, respectivement avec l'élément de découpe 621 et avec l'élément de conduction 622. Par conséquent, on prend pour hypothèse que la lame 62 doit réaliser 4 ruptures. Par conséquent, une quantité minimale de 80 mg d'explosif doit être utilisée. Comme une grande partie de l'énergie de détonation est dissipée sous forme de chaleur et de mise en mouvement d'éléments mécaniques (gonflage de la membrane 613 et déplacement de la lame 62) par exemple, on peut estimer qu'entre 20 % et 50 % de l'énergie de détonation est transformée en énergie mécanique de la lame 62. Une masse d'explosif 612 de 160 mg à 400 mg peut ainsi être utilisée en fonction de ce rendement. La masse d'explosif 612 pourra bien entendu être supérieure, pour tenir compte d'un coefficient de sécurité. Ces calculs pourront bien entendu être corrigés en présence d'une gaine entourant les sections conductrices des conducteurs 681 et 682 ou en fonction de la connaissance plus précise des éléments pyrotechniques envisagés.

Dans les exemples détaillés précédemment, le gaz sous pression entraînant la lame du conducteur électrique est produit par l'explosion de l'explosif présent dans l'élément pyrotechnique. Cependant, on peut également envisager que le gaz sous pression entraînant la lame du conducteur électrique soit stocké dans une bonbonne et séparé de la lame par une vanne, l'explosion dudit explosif induisant alors l'ouverture de la vanne pour entraîner la lame 62.

Dans les exemples détaillés précédemment, la lame 62 est entraînée selon une course en coulissement. On peut cependant bien entendu prévoir d'autres types de courses de sectionnement, par exemple avec un entraînement de la lame 62 en rotation.

Les sources d'alimentation continue de puissance 2 basées sur des panneaux photovoltaïques présentent typiquement des puissances crêtes de l'ordre de 3kWc pour des particuliers, entre 100 et 300kWc pour des installations industrielles ou sur des bâtiments agricoles, ou entre 1 et 10MWc pour des centrales photovoltaïques.

Dans les exemples détaillés précédemment, la source d'alimentation continue de puissance 2 est formée par des panneaux photovoltaïques. Cependant, l'invention est également utilisable pour toute autre source d'alimentation continue de puissance susceptible d'induire une électrocution, telle qu'une batterie d'accumulateurs électrochimiques de puissance.

Dans les exemples détaillés précédemment, le sectionneur réalise la découpe simultanée de deux conducteurs différents. Cependant, on peut également envisager de réaliser un sectionneur pour la découpe d'un unique conducteur de phase. On peut alors utiliser un sectionneur distinct pour chacune des phases.

Dans les exemples détaillés précédemment, les sectionneurs 6 sont disposés sur les connexions électriques série entre les panneaux photovoltaïques. Cependant, pour un panneau photovoltaïque à haute tension, des sectionneurs peuvent être disposés sur des connexions série à l'intérieur même du panneau, de sorte que le niveau de tension susceptible d'être appliqué soit suffisamment bas pour éviter une électrocution.

On peut prévoir un unique sectionneur dans l'installation électrique, entre la source de tension continue et l'onduleur.

## Revendications

1. Sectionneur (6) pour source d'alimentation électrique continue de puissance (2), comprenant
- une lame (62) mobile selon une course entre une position de conduction et une position de sectionnement, l'entraînement de la lame selon sa course rompant un premier conducteur électrique, destiné à conduire du courant d'une source d'alimentation continue, en deux portions isolées électriquement l'une de l'autre, l'entraînement de la lame selon sa course rompant un second conducteur électrique, destiné à conduire du courant d'une source d'alimentation continue, en deux portions isolées électriquement ;
- une source de gaz sous pression entraînant sélectivement la lame selon sa course ;
- un élément pyrotechnique (61) incluant un détonateur (611) à déclenchement par commande externe et un explosif (612) dont l'explosion est initiée par le détonateur, l'explosion de cet explosif induisant l'entraînement de la lame par la source de gaz ;
**caractérisé par** :
-un élément conducteur (622) solidaire de la lame (62) dans sa course et connectant électriquement une portion isolée du premier conducteur à une portion isolée du second conducteur électrique dans la position de sectionnement de la lame (62).

2. Sectionneur (6) selon la revendication 1, dans lequel l'explosion dudit explosif (612) produit le gaz sous pression d'entraînement de la lame.

3. Sectionneur (6) selon la revendication 2, comprenant en outre une enveloppe (613) dans laquelle se déverse le gaz sous pression produit par l'explosion dudit explosif (612), le remplissage de ladite enveloppe entraînant ladite lame (62).

4. Sectionneur selon l'une quelconque des revendications précédentes, dans lequel l'explosif (612) est configuré pour exploser spontanément lors d'un maintien prolongé à une température au moins égale à 200°.

5. Sectionneur selon l'une quelconque des revendications précédentes, dans lequel ladite lame (62) inclut un matériau isolant (621) destiné à être interposé entre lesdites deux portions isolées lorsque la lame est dans sa position de sectionnement.

6. Sectionneur selon l'une quelconque des revendications précédentes, dans lequel l'élément conducteur (622) connecte électriquement lesdites portions isolées par couplage mécanique par déformation plastique de ces portions isolées.

7. Sectionneur selon l'une quelconque des revendications précédentes, comprenant des premier et deuxième connecteurs électriques de puissance (683) connectés respectivement à des première et deuxième extrémités du premier conducteur électrique (681).

8. Sectionneur selon l'une quelconque des revendications précédentes, comprenant en outre un boîtier (692) dans lequel le premier conducteur électrique (681), la lame (62) et l'élément pyrotechnique (61) sont logés, le sectionneur comportant un indicateur visuel (697) indiquant à l'extérieur du boîtier (692) si la lame (62) est disposée dans la position de conduction ou dans la position de sectionnement.

9. Sectionneur selon l'une quelconque des revendications précédentes, dans lequel ladite lame (62) entraîne dans sa course une extrémité d'une portion isolée dudit premier conducteur de façon à maintenir cette extrémité à distance de l'autre portion isolée dudit premier conducteur dans la position de sectionnement de la lame.

10. système d'alimentation électrique continue de puissance, **caractérisé en ce qu'**il comprend :
- une source d'alimentation électrique continue de puissance ;
- un premier conducteur électrique (681) destiné à conduire du courant de la source d'alimentation continue ;
- un deuxième conducteur électrique (682) destiné à conduire du courant de la source d'alimentation continue ;
- un sectionneur (6) selon l'une quelconque des revendications précédentes.

11. Système d'alimentation électrique (1) selon la revendication 10, comprenant en outre :
- un circuit électrique connecté au détonateur (611) ;
- un premier connecteur (12) déporté par rapport à l'élément pyrotechnique (61) et connecté au circuit électrique ;
- une commande de détonateur (13), comprenant:
- un deuxième connecteur présentant un facteur de forme complémentaire du premier connecteur ;
- une source d'énergie électrique (132) connectée au deuxième connecteur.

12. Système d'alimentation électrique selon la revendication 10 ou 11, comprenant un réseau de distribution (5) connecté à la source d'alimentation électrique (2) par l'intermédiaire des premier et deuxième conducteurs électriques (681, 682), ledit élément conducteur solidaire de la lame (622) connectant électriquement les portions isolées des premier et deuxième conducteurs (681, 682) connectées au réseau de distribution électrique.

13. Système d'alimentation électrique selon la revendication 10 ou 11, dans lequel la source d'alimentation électrique (2) comprend au moins deux éléments (21) de génération électrique connectés en série par l'intermédiaire des premier et deuxième conducteurs (681, 682).

## Patentansprüche

1. Isolator (6) für eine Gleichstrom-Leistungsversorgungsquelle (2), umfassend :
- ein Blatt (62), das entlang einem Weg zwischen einer Leitungsposition und einer Trennposition beweglich ist, wobei der Antrieb des Blatts entlang seinem Weg einen ersten elektrischen Leiter, der dazu bestimmt ist, den Strom einer Gleichstromquelle zu leiten, in zwei elektrisch voneinander isolierte Abschnitte trennt, wobei der Antrieb des Blatts entlang seinem Weg einen zweiten elektrischen Leiter, der dazu bestimmt ist, den Strom einer Gleichstromquelle zu leiten, in zwei elektrisch voneinander isolierte Abschnitte trennt;
- eine Druckgasquelle, die das Blatt entlang seinem Weg selektiv antreibt;
- ein pyrotechnisches Element (61), das einen Zünder (611) mit extern gesteuerter Auslösung und einen Explosivstoff (612), dessen Explosion durch den Zünder eingeleitet wird, umfasst, wobei die Explosion dieses Explosivstoffs den Antrieb des Blatts durch die Gasquelle bewirkt;
**gekennzeichnet durch**:
- ein leitendes Element (622), das mit dem Blatt (62) in seinem Weg fest verbunden ist und einen isolierten Abschnitt des ersten Leiters mit einem isolierten Abschnitt des zweiten elektrischen Leiters in der Trennposition des Blatts (62) elektrisch verbindet.

2. Isolator (6) nach Anspruch 1, wobei die Explosion des Explosivstoffs (612) das Druckgas zum Antrieb des Blatts erzeugt.

3. Isolator (6) nach Anspruch 2, ferner umfassend eine Umhüllung (613), in der sich das Druckgas ausbreitet, das durch die Explosion des Explosivstoffs (612) erzeugt wurde, wobei die Füllung der Umhüllung das Blatt (62) antreibt.

4. Isolator nach einem der vorhergehenden Ansprüche, wobei der Explosivstoff (612) dafür ausgelegt ist, bei einem verlängerten Halten auf einer Temperatur von wenigstens gleich 200° spontan zu explodieren.

5. Isolator nach einem der vorhergehenden Ansprüche, wobei das Blatt (62) ein Isoliermaterial (621) aufweist, das dazu bestimmt ist, zwischen den zwei isolierten Abschnitten angeordnet zu werden, wenn sich das Blatt in seiner Trennposition befindet.

6. Isolator nach einem der vorhergehenden Ansprüche, wobei das leitende Element (622) die isolierten Abschnitte durch mechanische Kopplung durch plastische Verformung dieser isolierten Abschnitte elektrisch miteinander verbindet.

7. Isolator nach einem der vorhergehenden Ansprüche, umfassend einen ersten und einen zweiten elektrischen Leistungsverbinder (683), die mit dem ersten bzw. zweiten Ende des ersten elektrischen Leiters (681) verbunden sind.

8. Isolator nach einem der vorhergehenden Ansprüche, ferner umfassend ein Gehäuse (692), in dem der erste elektrische Leiter (681), das Blatt (62) und das pyrotechnische Element (61) untergebracht sind, wobei der Isolator eine visuelle Anzeige (697) umfasst, die außerhalb des Gehäuses (692) anzeigt, ob sich das Blatt (62) in der Leitungsposition oder in der Trennposition befindet.

9. Isolator nach einem der vorhergehenden Ansprüche, wobei das Blatt (62) in seinem Weg ein Ende eines isolierten Abschnitts des ersten Leiters derart antreibt, dass dieses Ende in der Trennposition des Blatts vom anderen isolierten Abschnitt des ersten Leiters beabstandet gehalten wird.

10. Gleichstrom-Stromversorgungssystem, **dadurch gekennzeichnet, dass** es umfasst:
- eine Gleichstrom-Stromversorgungsquelle;
- einen ersten elektrischen Leiter (681), der dazu bestimmt ist, den Strom der Gleichstromquelle zu leiten;
- einen zweiten elektrischen Leiter (682), der dazu bestimmt ist, den Strom der Gleichstromquelle zu leiten;
- einen Isolator (6) nach einem der vorhergehenden Ansprüche.

11. Stromversorgungssystem (1) nach Anspruch 10, ferner umfassend:
- einen mit dem Zünder (611) verbundenen Stromkreis;
- einen ersten Verbinder (12), der in Bezug auf das pyrotechnische Element (61) versetzt ist und mit dem Stromkreis verbunden ist;
- eine Zündersteuerung (13), umfassend:
- einen zweiten Verbinder, der einen Formfaktor aufweist, der komplementär zum ersten Verbinder ist;
- eine Quelle für elektrische Energie (132), die mit dem zweiten Verbinder verbunden ist.

12. Stromversorgungssystem nach Anspruch 10 oder 11, umfassend ein Verteilernetz (5), das über den ersten und zweiten elektrischen Leiter (681, 682) mit der Stromversorgungsquelle (2) verbunden ist, wobei das fest mit dem Blatt verbundene leitende Element (622) die isolierten Abschnitte des ersten und zweiten Leiters (681, 682), die mit dem Stromverteilnetz verbunden sind, elektrisch miteinander verbindet.

13. Stromversorgungssystem nach Anspruch 10 oder 11, wobei die Stromversorgungsquelle (2) wenigstens zwei Elemente (21) zur Stromerzeugung umfasst, die über den ersten und zweiten Leiter (681, 682) in Reihe geschaltet sind.

## Claims

1. Isolator (6) for DC electrical power supply source (2), including:
- a blade (62) movable along a travel between a conduction position and an isolating position, the driving of the blade along its travel breaking a first electrical conductor, for conducting the current from a DC power supply source, into two portions electrically isolated from each other, the driving of the blade along its travel breaking a second electrical conductor, for conducting a DC power supply source, into two electrically isolated portions;
- a pressurized gas source selectively driving the blade along its travel;
- a pyrotechnic element (61) including a detonator (611) triggered by external control and an explosive (612) whereof the explosion is initiated by the detonator, the explosion of this explosive inducing the driving of the blade by the gas source; **characterized by**:
- a conductive element (622) rigidly connected to the blade (62) in its travel and electrically connecting an isolated portion of the first conductor to an isolated portion of the second electrical conductor in the isolating position of the blade (62).

2. Isolator (6) according to Claim 1, in which the explosion of said explosive (612) produces the pressurized gas for driving the blade.

3. Isolator (6) according to Claim 2, further including an envelope (613) into which the pressurized gas produced by the explosion of said explosive (612) flows, the filling of said envelope driving said blade (62).

4. Isolator according to any one of the preceding claims, in which the explosive (612) is configured for spontaneously exploding during a prolonged maintenance at a temperature at least equal to 200 °.

5. Isolator according to any one of the preceding claims, in which said blade (62) includes an insulating material (621) intended to be interposed between said two isolated portions when the blade is in the isolating position.

6. Isolator according to any one of the preceding claims, in which the conductor (622) electrically connects said isolated portions by mechanical coupling by plastic deformation of these isolated portions.

7. Isolator according to any one of the preceding claims, including first and second electrical power connectors (683) respectively connected to first and second ends of the first electrical conductor (681).

8. Isolator according to any one of the preceding claims, further including a housing (692) in which the first electrical conductor (681), the blade (62) and the pyrotechnic element (61) are housed, the isolator comprising a visual indicator (697) indicating outside the housing (692) whether the blade (62) is arranged in the conduction position or in the isolating position.

9. Isolator according to any one of the preceding claims, in which said blade (62) drives in its travel one end of an isolated portion of said first conductor so as to maintain this end away from the other isolated portion of said first conductor in the isolating position of the blade.

10. A DC electrical power supply system, **characterized in that** it includes:
- a DC electrical power supply source;
- a first electrical conductor (681) for conducting the current from the DC power supply source;
- a second electrical conductor (682) for conducting the current from the DC power supply source;
- an isolator (6) according to any one of the preceding claims.

11. Electrical power supply system (1) according to Claim 10, further including:
- an electrical circuit connected to the detonator (611);
- a first connector (12) remote from the pyrotechnic element (61) and connected to the electrical circuit;
- a detonator control (13) including:
- a second connector having a form factor complementary to the first connector;
- a source of electrical energy (132) connected to the second connector.

12. Electrical power supply system according to Claim 10 or 11, including distribution network (5) connected to the electrical power supply source (2) via first and second electrical conductors (681, 682), said conductive element rigidly connected to the blade (622) electrically connecting the isolated portions of the first and second conductors (681, 682) connected to the electrical distribution network.

13. Electrical power supply system according to claim 10 or 11, in which the electrical power supply source (2) includes at least two electricity generating elements (21) connected in series via the first and second conductors (681, 682).
